# EUROPEAN PATENT APPLICATION

(11) **EP 1 583 082 A1**
(43) Date of publication of application: **05.10.2005**
(21) Application number: 03778787.6
(22) Date of filing: 10.12.2003
(51) Int. Cl.: G11B 7/0045, G11B 7/125

(54) **OPTICAL RECORDING METHOD AND OPTICAL RECORDING DEVICE**

(30) Priority: 07.01.2003 JP 2003001556
(71) Applicant: SONY CORPORATION, Tokyo 141-0001 (JP)
(72) Inventor: FUJIMOTO, Takashi, c/o Sony Corporation, Tokyo 141-0001 (JP); SHIGENOBU, Masahiro, c/o Sony Corporation, Tokyo 141-0001 (JP); ARIDOME, Kenichiro, c/o Sony Corporation, Tokyo 141-0001 (JP); MAEDA, Yasuaki, c/o Sony Corporation, Tokyo 141-0001 (JP); FUJIMOTO, Kensuke, c/o Sony Corporation, Tokyo 141-0001 (JP); MAWATARI, Hideki, c/o Sony Corporation, Tokyo 141-0001 (JP)
(74) Representative: Mills, Julia
(86) International application number: PCT/JP2003/015817
(87) International publication number: WO 2004/061831

(57) **Abstract**

The present invention relates to an optical recording method for recording data on an optical disc by using a laser beam. When the optical disc is inserted into an optical recording device (step S1), a test writing area PCA (Power Calibration Area) that can be used for an OPC (Optimum Power Calibration) on the optical disc is searched and an optical pickup is allowed to stand by at that position (step S4). Then, when an input of a recording operation of data is received (step S6), an OPC operation is carried out at the stand-by position (step S7). After an optimum power is obtained, the optical pickup is moved to a data recording area on the optical disc (step S10) to record the data in the data recording area of the optical disc by the optical pickup (step S11).

## Description

### Technical Field

The present invention relates to an optical recording method and an optical recording device for recording data to an optical recording medium such as an optical disc by using a laser beam.

This application claims a priority based on Japanese Patent Application No. 2003-001556 filed on January 7, 2003 in Japan, which is applied to this application by referring thereto.

### Background Art

A disc shaped recording medium (refer it to as an optical disc, hereinafter) such as what is called a CD (Compact Disc) or a DVD (Digital Versatile Disc) to which an optical reading method is applied has a large storage capacity and a random access can be realized in the optical disc. Since such an optical disc can read information under a non-contact state with a reading head, a risk such as a head crash or an abrasion or a damage due to reading can be prevented as compared with a contact type recording medium such as a magnetic tape. Further, since the surface of the disc is protected by a protective layer or the like, a risk that data accidentally disappears rarely occurs. The optical disc having many advantages as described above is a recording medium having excellent characteristics as a peripheral memory of a computer or in preparing data or storing data.

In a recording and reproducing device using the optical disc, a recording and reproducing device using a write-once optical disc called a CD-R (Compact Disc-Recordable) has been developed.

Some of the CD-R can simply write data with a format corresponding to all standard formats used in the compact discs such as a CD-ROM, a CD-ROM/XA, a CD-I and a CD-DA. Further, the CD-R has been widely employed as the recording medium of the recording and reproducing device for recording and/or reproducing the data in place of the usual magnetic tape and the magnetic disc or the like.

For instance, the write-once optical disc has been known in which an organic recording material is applied to one surface of a disc having the same size as that of the compact disc (CD) and arbitrary data is written on the surface by a light beam. In this write-once optical disc, a trial writing area PCA (Power Calibration Area) is basically formed in an innermost peripheral side and a data writing area is formed in an outer side thereof.

When the data is written in the above-described write-once optical disc, the data is experimentally written in the trial writing area so that the prescribed asymmetry of a reproducing signal is obtained. The output of a laser beam in which the asymmetry obtained as a result is constant is considered to be an optimum output. While the optimum output is held, the data is written in the data writing area (see an official gazette of Patent No. 3089844).

Since in a laser diode used in the CD-R, a laser output for writing data varies owing to characteristics for each recording medium and ambient temperature, the output level of the laser is gradually changed to perform a trial writing in the trial writing area PCA provided in the inner peripheral part of the recording medium immediately before the data is written. Thus, an optimum writing output is determined under an environment at that time. This operation is called an OPC (Optimum Power Calibration).

In the standard of the CD-R, on the groove of a lead-in area, timing information on media with a prescribed form of an ATIP (Absolute Time In Per-groove, Modulating) and information such as the start time of the lead-in area in the ratio of one frame to 10 frames are encoded and written.

This encoded information is also used as an identifying code for individually identifying makers and recording media. Writing characteristics for each recording medium designated by the code described herein are previously stored in a recording device side. Then, the recording device obtains various kinds of parameter groups related to writing and an optimum parameter group corresponding to the identifying code is selected and employed upon wiring data. This method is called a write strategy in which the optimum value of the laser output is designated when a laser pulse is partly changed in the direction of a time base and an intensity in accordance with an EFM pulse length.

Further, in the DVD (Digital Versatile Disc) as the optical disc for treating the data of large capacity such as video data, as the optical disc that can write information, a DVD-R (DVD-Recordable) capable of writing data only once, a DVD-RW (DVD-Rewritable) capable of additionally writing data, a DVD-RAM (DVD-Random Access Memory) are proposed.

In the drive of the CD-R or the DVD-R, a laser power during recording data is controlled, that is, an R-OPC (Running Optimum Control) is carried out. It is an object of the R-OPC is to absorb an unevenness in reflectance in the inner and outer peripheries of the optical disc, the change of a spot intensity distribution due to a coma aberration that is generated by the skew of the disc, and the change of laser wavelength due to a temperature rise.

Here, a recording format in the DVD-R or the DVD-RW will be described below.

Data recorded in the DVD-R or the DVD-RW has a format that is not adapted to the format of a reproducing device corresponding only to a DVD-video format. Accordingly, the data cannot be reproduced.

Therefore, in order to reproduce the data recorded in the DVD-R or the DVD-RW (refer them to as a DVD-R/-RW, hereinafter) by the above-described reproducing device, the data recorded in the DVD-R/-RW needs to be converted to a prescribed format based on the DVD-video format. In order to reproduce the data recorded in the DVD-R/-RW by the reproducing device, the data recorded in the DVD-R/-RW needs to be adapted to the standard of a UDF (Universal Disk Format).

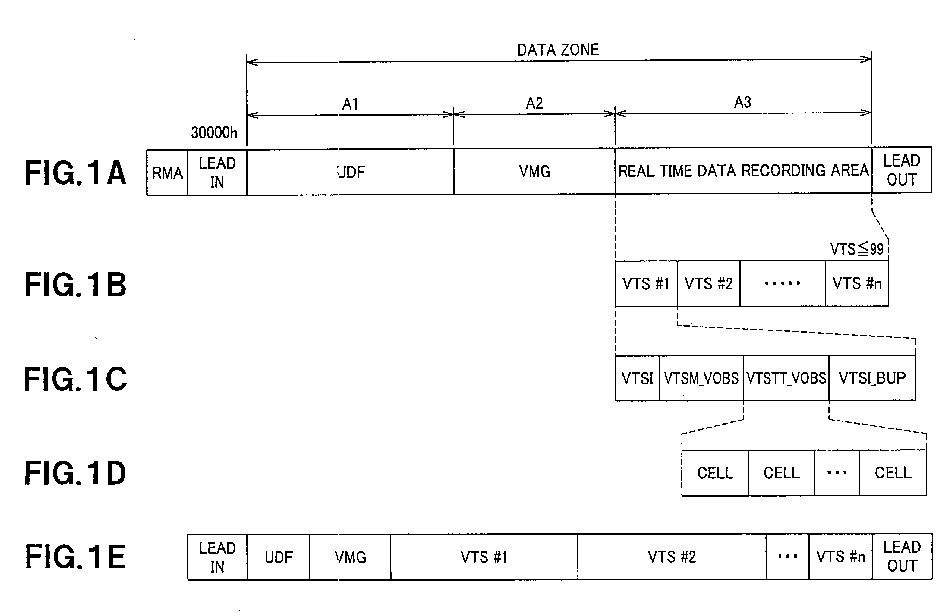

Figs. 1A to 1D are views showing the structure of the data of the optical disc recorded by a logic format based on the DVD-video format. The optical disc corresponding to the DVD-video format has, as shown in Fig. 1A, an information recording surface divided into a lead in area, a data zone and a lead out area from an innermost side as a head side. In the data zone, desired real data is recorded.

Here, the data zone is divided into a UDF (Universal Disk Format) area A1 as a file system area in which a UDF bridge structure is described, a VMG (Video Manager) area A2 as a DVD control information area, and a real time data recording area A3 from the lead in side. The UDF area A1 and the VMG area A2 are areas for recording information for controlling video data recorded in the real time data recording area A3. Further, the UDF area A1 is called a first control information area and the VMG area A2 is called a second control information area. The VMG area A2 as the second control information area is an area corresponding to a file control system peculiar to the DVD-video format. In the VMG area A2, the information of TOC (Table of Contents) that is information for controlling all video data recorded in the real time data recording area A3 is recorded. On the other hand, the UDF area A1 as the first control information area is an area corresponding to a file control system by the reproducing device. In the UDF area A1, information is recorded for controlling all the video data recorded in the real time data recording area A3 by a format such as the UDF for realizing a compatibility with a file system in a PC.

The real time data recording area A3 is a user area for recording real data such as a moving image and a still image. As shown in Fig. 1B, the moving image and the still image are recorded by using a VTS (Video Title Set) as a unit. The VTS (video Title Set) is called a title. The number of the VTSs that can be provided is 99 at maximum. As shown in Fig. 1C, the VTS is composed of, from a head side, VTSI (Video Title Set Information), VTSM_VOBS (Video Object Set for the VTSM), VTSTT_VOBS (Video Object Set For Titles in a VTS), and VTSI_BUP (Backup of VTSI). In the VTSTT_VOBS, video data by a format of a MPEG (Moving Picture Experts Group) 2 as real data is recorded. In the VTSI, recording position information that is information for controlling the video data of the real data is recorded. In the VTSM_VOBS, the title menu of the video data is recorded. The VTSM_VOBS is an option. The VTSI_BUP is an area for recording data for backing up the VTSI. The VTSTT_VOBS is formed with data respectively packeted for each prescribed quantity. For instance, when data to be recorded is the moving image, the VTSTT_VOBS is composed of a plurality of CELLs by using a CELL as a unit.

As shown in Fig. 1E, in the optical disc, the UDF area and the VMG area are formed in areas padded by a finalizing process. In an innermost periphery, the lead in area is formed. In an outermost periphery, a lead out area is formed. A compatibility with a ROM optical disc can be achieved by the finalizing process.

When the optical disc having the above-described data structure is accessed by the reproducing device, the optical disc is set so that a desired file can be searched and reproduced by the UDF area A1. When data is reproduced by a DVD player, the optical disc is set so that a desired file can be searched and reproduced by the VMG area A2.

A recording system for writing the moving image in the optical disc includes an Incremental Recording system (refer it to as an INC system, hereinafter) or a Restricted Over Write system (refer it to as a ROW system, hereinafter). The INC system is mainly employed in the DVD-R or the like to sequentially record the moving image. The ROW system is mainly employed in the DVD-RW or the like to record the moving image at random. Even in the ROW system, when data is recorded in an area in which data is not recorded, the moving image needs to be sequentially recorded. In the INC system and the ROW system, a process to the optical disc such as a reservation is managed by a recording management area (RMA) provided in an inner peripheral side from the lead in area.

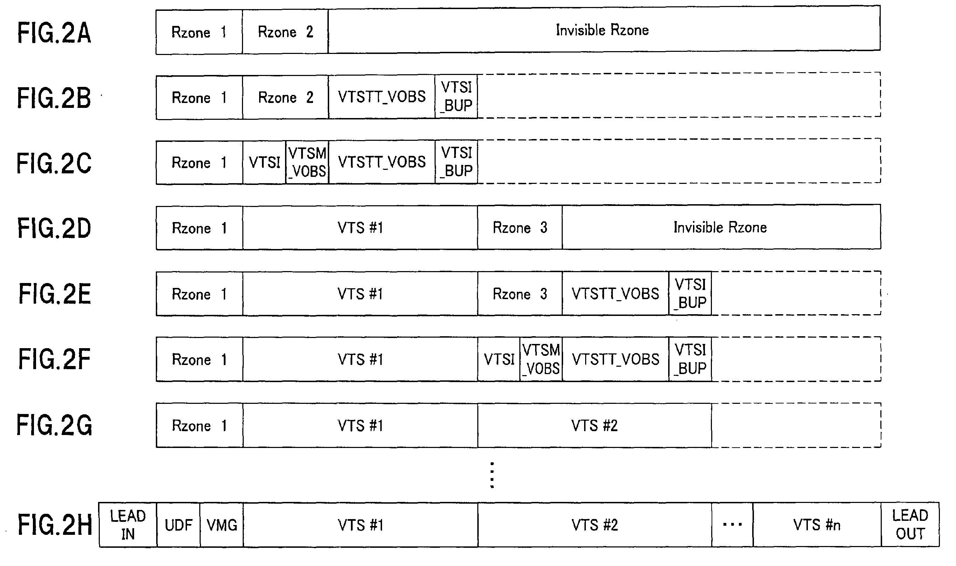

A recording procedure by the INC system is shown in Figs. 2A to 2H. In the INC system, areas in which the data can be written at a time are defined to be three at maximum. The areas are respectively referred to as Rzones and each Rzone is managed by the RMA.

Specifically, when the moving image is recorded, in the INC system, the Rzone is firstly reserved as shown in Fig. 2A. Here, the reservation of the Rzone is performed in such a way that the area of an Rzone 1 forming the UDF area A1 and the VMG area A2 as the areas for recording control information is defined, subsequently, the area of an Rzone 2 forming the VTSI and VTSM_VOBS of the head VTS is defined in a non-recorded area forming the real time data recording area A3, and a remaining non-recorded area is defined as an Invisible Rzone (Rzone 3). In the INC system, the Rzone 1 and the Rzone 2 are reserved to ensure the area for recording the control information and the area for forming the VTSI and VTSM_VOBS of the head VTS.

In the INC system, the moving images are sequentially recorded from the head side of the Invisible Rzone to form the VTSTT_VOBS by real data. Further, when the real data of one VTS is completely recorded in accordance with an instruction of a user, the VTSI_BUP is recorded subsequently to the record of the real data as shown in Fig. 2B. Further, as shown in Fig. 2C, the VTSI and VTSM_VOBS are formed in the Rzone 2 by returning to the head side to close the Rzone 2. Thus, in the INC system, one VTS is recorded on the optical disc.

When a next VTS is continuously recorded, in the INC system, as shown in Fig. 2D, the Rzone 3 is reserved in the remaining non-recorded area to ensure the areas of the VTSI and VTSM_VOBS and define the Invisible Rzone. Further, subsequently, as shown in Fig. 2E, the VTSTT_VOBS is formed by recording the real data, and then, the VTSI_BUP is formed to form the VTSI and VTSM_VOBS in the previously ensured areas as shown in Fig. 2F. Thus, in the optical disc, as shown in Fig. 2G, a subsequent VTS is recorded. In the INC system, when the VTS is continuously recorded, the non-recorded area is defined in the same manner to sequentially record the VTSs.

Further, in the optical disc, as shown in Fig. 2H, the UDF area A1 and the VMG area A2 are formed in the Rzone 1 by a finalizing process, the lead in area is formed in the innermost periphery and the lead out area is formed in the outermost periphery. The finalizing process enables a compatibility with the ROM optical disc. When the UDF area A1 and the VMG area A2 are formed, data to be recorded in the UDF area A1 and the VMG area A2 is generated from the data of the VTSI and VTSM_VOBS of each VTS, the data is recorded in the Rzone 1, and the Rzone 1 is closed.

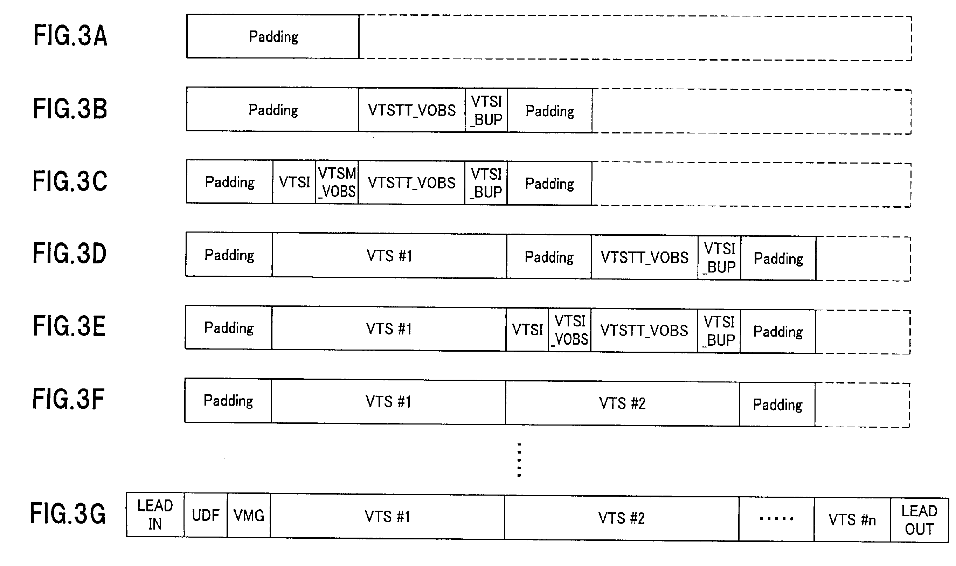

Now, a recording procedure by the ROW system is shown in Figs. 3A to 3G. In the ROW system, as shown in Fig. 3A, a lead in area, a UDF area, a VMG area and recording areas of a VTSI and a VTSM_VOBS in a head VTS are previously ensured by padding. Here, the padding means a process that dummy data such as NULL is recorded to ensure an area.

When these areas are ensured in such a way, in the ROW system, as shown in Fig. 3B, images are sequentially recorded to form a VTSTT_VOBS by real data. When the recording of the real data of one VTS is completed, a VTSI_BUP is subsequently recorded. The padding process is performed to ensure the recording areas of the VTSI and the VTSM_VOBS of a further subsequent VTS. Subsequently, returning to a head side, as shown in Fig. 3C, the VTSI and the VTSM_VOBS corresponding to the record of the real data are formed. In the ROW system, one VTS is recorded on the optical disc in such a way as described above.

When a next VTS is continuously recorded, in the ROW system, as shown in Fig. 3D, the real data is recorded subsequently to the area of the padding formed by an immediately preceding VTS to form a VTSTT_VOBS and a VTSI_BUP. The padding process is performed to ensure the recording areas of the VTSI and the VTSM_VOBS of a subsequent VTS. Subsequently, as shown in Fig. 3E, the VTSI and the VTSM_VOBS are formed. Thus, as shown in Fig. 3F, a subsequent VTS is recorded on the optical disc. In the ROW system, when VTSs are continuously recorded, the padding process is performed in the same manner as described above and the VTSs are sequentially recorded.

Further, in the optical disc, as shown in Fig. 3G, the UDF area and the VMG area are formed in the padding areas by a finalizing process, the lead in area is formed in the innermost periphery and the lead out area is formed in the outermost periphery. The finalizing process enables a compatibility with the ROM optical disc.

The above-described INC system or the ROW system is employed so that data whose image is picked up by a camera can be recorded in the DVD-R/-RW. Especially, in recent years, what is called a disc camcorder in which a camera is integrally formed with a recording device having a disc drive for the DVD-R/-RW is proposed in Japanese Patent Application Laid-Open No. 2001-006266.

In a usual optical disc recording device, when the disc is inserted into the recording device, optimum recording power is obtained in a PCA and an R-OPC reference value is obtained at the same time. A PCA area is adequately used so that the R-OPC reference value can be precisely obtained. However, in the case of the DVD-R, the PCA area has only 6832 sectors and 427 blocks. When the PCA area is considered to be used for a video data recording device in which an image and an audio are recorded such as the video camcorder with the camera, such a use as to repeat recording operations in small pieces, for instance, what is called a stop and start recording may be taken into consideration. Thus, the writing test areas of the PCA are consumed due to the repeated records, and although there is a room in a recording area, when all the writing test areas for recording are completely consumed, data may not be possibly recorded. Further, in this case, since the PCA area is employed in the video camera, a range of available temperature environment is vary wide. Thus, an OPC needs to be more frequently performed.

However, in the write-once optical disc capable of writing data only once, the number of times that the OPC can be performed by using the PCA is limited. Therefore, the number of times of the OPCs in the PCA needs to be reduced as much as possible. Further, a quantity of the PCA used for the OPC of one time needs to be reduced as much as possible.

### Disclosure of the Invention

It is an object of the present invention to provide a new optical recording method and an optical recording device that can solve the above-described problems of the related art.

It is another object of the present invention to record an image or an audio with a proper recording power without an interruption by shortening a time for measuring an optimum recording power and improving an accuracy therefor in a recording device of video data for recording the image and the audio such as a video camcorder with a camera using an optical disc as a recording medium.

It is a still another object of the present invention to obtain an R-OPC reference value without using a PCA, record the R-OPC reference value in a necessary and adequate area by using a data recording area and obtain a precise R-OPC reference value.

To achieve the above-described objects, an OPC needs to be performed under the same environment as a set temperature environment under which an R-OPC is carried out. An optimum power and an R-OPC reference value need to be completely obtained by the OPC within a time after a user presses a REC button until recording data begins to be recorded on the optical disc.

Thus, in the present invention, to shorten the time required for the operation, after the optical disc is inserted into the recording device, the PCA that can be used for the OPC is immediately searched. In the PCA, an optical pickup (OP) is stood by or stopped under a still state and the optical pickup is located at that position. Thus, since an operation immediately before the operation of the OPC can be completed before a recording button is pressed, an operation that the PCA is searched and sought after the recording button is pressed can be saved and the time until the start of a recording operation can be shortened. Since the R-OPC reference value can be obtained under the same setting environment as that of the OPC operation, a highly accurate value can be obtained. The R-OPC reference value is not obtained in the restricted area of a PCA area and can be recorded and obtained in the adequate area in the data recording area. Thus, a more highly accurate value than a usual value can be obtained.

Namely, the present invention provides an optical recording method in an optical recording device for recording data on an optical recording medium by an optical pickup. The optical recording method includes the steps of: searching a test writing area PCA (Power Calibration Area) that can be used for an OPC (Optimum Power Calibration) on the optical recording medium when the optical recording medium is inserted into the optical recording device, and allowing the optical pickup to stand by at that position; and carrying out an OPC operation at the stand-by position when an input of a recording operation of data is received, moving the optical pickup to a data recording area on the optical recording medium after an optimum power is obtained, and recording the data in the data recording area on the optical recording medium by the optical pickup.

In the optical recording method according to the present invention, real recording data is recorded in the data recording area by the optical pickup moved to the data recording area on the optical recording medium to obtain a reference value of an R-OPC (Running Optimum Control) and record the data while the R-OPC is performed on the basis of the obtained reference value.

The present invention provides an optical recording device for recording data on an optical recording medium by an optical pickup. The optical recording device includes: a control means performing a control for searching a test writing area PCA (Power Calibration Area) that can be used for an OPC (Optimum Power Calibration) on the optical recording medium when the optical recording medium is inserted into the optical recording device, and allowing the optical pickup to stand by at that position; and carrying out an OPC operation at the stand-by position when an input of a recording operation of data is received, moving the optical pickup to a data recording area on the optical recording medium after an optimum power is obtained, and recording the data in the data recording area on the optical recording medium by the optical pickup.

In the optical recording device according to the present invention, the control means records real recording data in the data recording area by, for instance, the optical pickup moved to the data recording area on the optical recording medium to obtain a reference value of an R-OPC (Running Optimum Control) and record the data while the R-OPC is performed on the basis of the obtained reference value.

Further, the optical recording device according to the present invention further includes an image pick-up means to record a video signal obtained by the image pick-up means on the optical recording medium.

Still other objects of the present invention and specific advantages obtained by the present invention will be more apparent from the description of an embodiment explained by referring to the drawings.

### Brief Description of the Drawings

Figs. 1A to 1E are diagrams showing the structures of data of an optical disc in which the data is recorded in accordance with a logical format based on a DVD-video format.
Figs. 2A to 2H are diagrams schematically showing a recording procedure of the optical disc by an INC system.
Figs. 3A to 3G are diagrams schematically showing a recording procedure of the optical disc by a ROW system.
Fig. 4 is a block diagram showing the structure of a disc camcorder to which the present invention is applied.
Fig. 5 is a block diagram showing a disc drive in the disc camcorder.
Fig. 6 is a flowchart showing a control procedure of the disc drive in the disc camcorder.
Fig. 7 is a diagram schematically showing processes for performing a recording operation of the data in the disc drive.

### Best Mode for Carrying Out the Invention

Now, the present invention will be described by way of an example in which the present invention is applied to a disc camcorder.

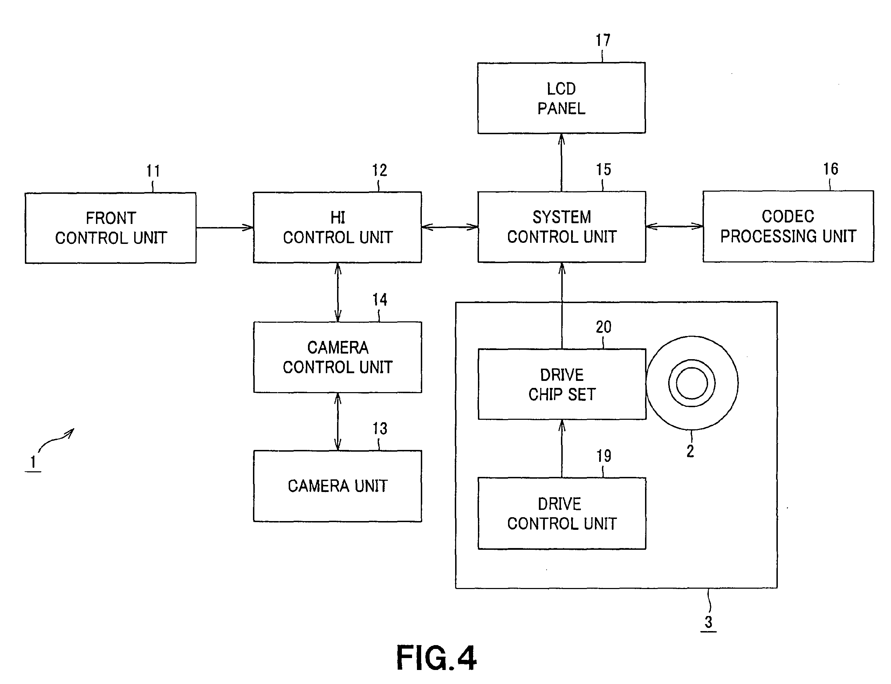

The disc camcorder according to the present invention serves to record an image picked up result on an optical disc of a DVD-R (DVD-Recordable) or a DVD-RW (DVD-Rewritable). As shown in Fig. 4, the disc camcorder 1 includes a disc drive 3 into which an optical disc 2 is inserted, a front control unit 11 for generating an operation control signal corresponding to an input of an operation by a user, an HI control unit 12 for transmitting and receiving various kinds of information to/from other component elements in accordance with the operation control signal outputted from at least the front control unit 11, a camera unit 13 for picking up an image of a subject to generate an image signal, a camera control unit 14 for controlling the camera unit 13, a system control unit 15 for controlling the component elements respectively, a codec processing unit 16 for performing compressing and expanding processes to the image signal, and an LCD panel 17 connected to the system control unit 15 to display the information to the user.

The disc drive 3 includes a drive control unit 19 and a drive chip set 20 disposed between the system control unit 15 and the drive control unit 19.

The front control unit 11 receives an input of the pressure of an eject switch provided on an outer surface of a casing member of the disc camcorder 1 to generate an EJECT signal and transmit the EJECT signal to the HI control unit 12. The front control unit 11 receives an input of the pressure of a power switch provided on the outer surface to generate a PW signal and transmit the PW signal to the HI control unit 12. Further, the front control unit 11 controls a clock in the disc camcorder 1 and generates a prescribed operation control signal in accordance with a kind of a pressed and inputted key and transmits the prescribed operation control signal to the HI control unit 12. The pressure input of the key may be performed by receiving a radio signal transmitted from a terminal of a remote controller that is not shown in the drawing.

The HI control unit 12 generates an EJ control signal on the basis of the EJECT signal received from the front control unit 11 and transmits the EJ signal to the drive control unit 19 of the disc drive 3. Further, the HI control unit 12 controls the ON/OFF of a power source of the disc camcorder 1 in accordance with the PW signal received from the front control unit 11. The HI control unit 12 transmits and receives various kinds of information relative to the camera control unit 14 through, for instance, an I/O sync bus and transmits and receives various kinds of information to/from the system control unit 15 through a bus. The HI control unit 12 generates a command on the basis of the various kinds of operation control signals received from the front control unit 11 and transmits the command respectively to the component elements or performs a prescribed operation. For instance, when a recording mode and a reproducing mode are designated from the user through the front control unit 11, an operation control signal for informing that the recording mode and the reproducing mode are designated by the user is transmitted to the HI control unit 12. The HI control unit 12 identifies the detail of the designated mode in accordance with the operation control signal and transmits a prescribed control signal to the drive control unit 19 of the disc drive 3.

The HI control unit 12 further performs the control of a DVD reproducing navigation and a data communication with other electronic devices through a USB (Universal Serial Bus) interface.

The camera unit 13 generates an image signal by a photoelectric transfer using, for instance, a CCD image sensor on the basis of the photographed subject. The camera unit 13 performs, for instance, a correlated double sampling process relative to the generated image signal to remove a noise component and carry out signal processes such as a shading correction, a masking correction, a knee correction, a γ correction, a contour compensation, etc. The camera unit 13 further amplifies the obtained signal and supplies to the HI control unit 12 through the camera control unit 14.

The camera control unit 14 performs a control of a mechanical shutter, a control of a strobe, and a camera shake correction as well as a control of the video signal process in the camera unit 13, a zoom adjustment, a pan/tilt adjustment, and a focus adjustment.

The codec processing unit 16 converts the image signal obtained by the camera unit 13 to a digital signal to generate video data. When the generated video data is a moving image, the codec processing unit 16 compresses the data on the basis of an MPEG (Moving Picture Experts Group) 2 system in accordance with a control by the system control unit 15. When the video data is a still image, the codec processing unit 16 compresses the data on the basis of a JPEG (Joint Photographic Coding Experts Group) system. The compressed video data is transmitted to the drive control unit 19 of the disc drive 3 and further transmitted to other electronic devices through a USB cable connected to the HI control unit 12. Thus, in the disc camcorder 1, the image picked up result and a reproduced result can be monitored in an external device. The codec processing unit 16 may generate a thumbnail image from the compressed video image.

The codec processing unit 16 expands, upon reproducing the video data, the video data based on a reproducing RF signal read out from the optical disc 2 so as to meet the above-described system.

The system control unit 15 time division multiplexes the video data outputted from the codec processing unit 16, upon recording the video data, and adds header information peculiar to a DVD or the header information of an expansion file to the video data. The system control unit 15 generates the data of a UDF, a VMG and a VTSI and outputs the data to the drive control unit 19 of the disc drive 3. The system control unit 15 further generates, upon recording the data, an error correcting code by using a RAM that is not shown in the drawing and adds the error correcting code to the video data. At this time, the system control unit 15 may perform processes such as a scrambling process and a 8/15 modulation relative to the video data.

The system control unit 15 performs a graphic process in the LCD panel 17 and controls the brightness of a back light disposed in the rear surface of the LDC panel 17.

The LCD panel 17 functions as an electronic view finder and is composed of many liquid crystal display elements to form a display for displaying information to the user. The LCD panel 17 displays a prescribed message under the control of the system control unit 15.

The drive control unit 19 of the disc drive 3 controls the recording and reading processes of the video data to the optical disc 2. The drive control unit 19 further controls a spindle drive of the optical disc 2, and controls a focus drive, a tracking drive, and a thread drive of the optical pickup. The drive control unit 19 controls a taking out mechanism by which the user ejects the optical disc 2 inserted into the disc drive 3 on the basis of the EJ control signal transmitted from the HI control unit 12.

The structure of the disc drive 3 will be described below in detail.

In the disc camcorder 1 having the above-described structure, the image signal based on the photographed subject is compressed by the prescribed system to form the video data and the video data can be recorded on the optical disc 2. When the video data is reproduced, the video data read out from the optical disc 2 is expanded to display the video data through the LCD panel 17. Otherwise, the video data is transmitted to other electronic devices so that the video data can be monitored.

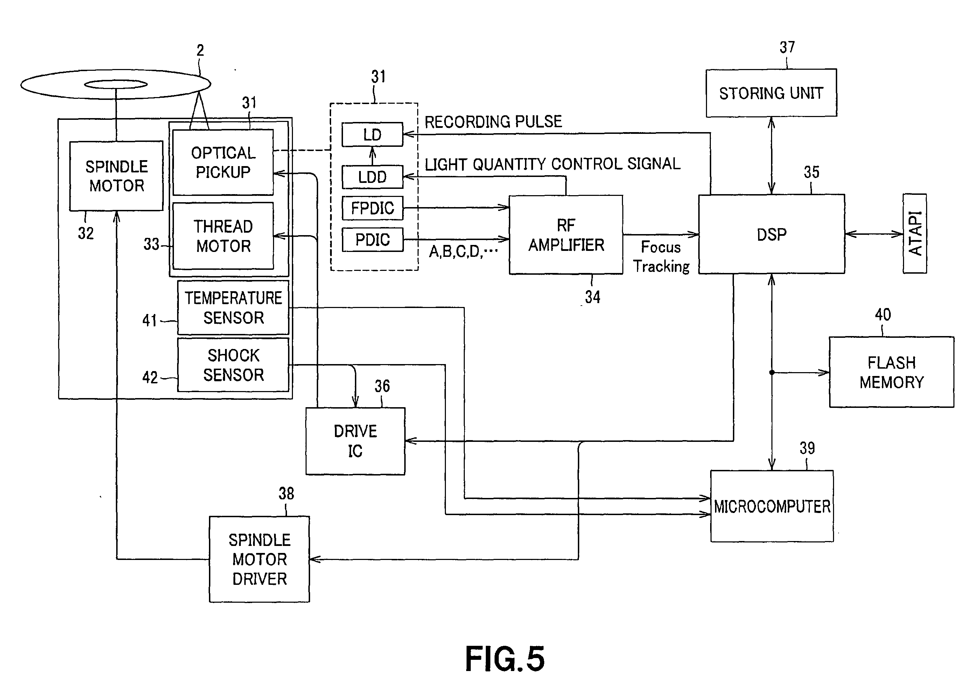

Now, the detail of the disc drive 3 will be described by referring to a block diagram shown in Fig. 5.

As shown in Fig. 5, the disc drive 3 includes an optical pickup 31 for recording the video data on the inserted optical disc 2 or detecting the video data recorded on the optical disc 2, a spindle motor 32 for rotating the optical disc 2, a thread motor 33 for moving the optical pickup 31 in the radial direction of the optical disc 2, an RF amplifier 34 connected to the optical pickup 31, a digital signal processor (DSP) 35 for transmitting a signal from the RF amplifier 34 to a storing unit 37 and generating various kinds of servo driving signals, a drive IC 36 for controlling the thread motor 33 and a two-shaft coil in the optical pickup 31 that is not shown in the drawing in accordance with the servo driving signal from the connected DSP 35, a spindle motor driver 38 for controlling the spindle motor 32 on the basis of the servo driving signal from the connected DSP 35, a microcomputer 39 for controlling respectively the components, a flash memory 40 for storing programs to be performed to the DSP 35 and the microcomputer 39, a temperature sensor 41 for detecting the temperature of the disc drive 3, and a shock sensor 42 for detecting an impact respectively connected to the microcomputer 39.

The optical pickup 31 outputs a laser beam from a semiconductor laser incorporated therein to condense the laser beam on the information recording surface of the optical disc 2 through an objective lens. Further, the optical pickup 31 guides return light obtained from the optical disc 2 due to the irradiation of the laser beam to a prescribed light receiving element through the objective lens to output the light receiving result of the light receiving element to the RF amplifier 34. The optical pickup 31 moves the objective lens in the optical pickup 31 in the direction of an optical axis and in the direction perpendicular to the direction of the optical axis by using the two-shaft coil not shown in the drawing in accordance with a focus driving signal and a tracking start signal supplied from the drive IC 36.

A disc table on which the optical disc 2 is mounted is integrally attached to the spindle motor 32. The spindle motor 32 rotates the optical disc 2 mounted on the disc table by rotating and driving a driving shaft at, for instance, a constant linear velocity (CLV) or a constant angular velocity (CAV) on the basis of a spindle driving signal supplied from the spindle motor driver 38.

The thread motor 33 moves the optical pickup 31 in the radial direction of the optical disc 2 in accordance with a thread driving signal supplied from the drive IC 36.

In the disc drive 3 having the above-described structure, while the rotating speed of the optical disc 2 and the position of the optical pickup 31 are adjusted by the spindle motor 32 and the thread motor 33, the recording surface of the optical disc 2 is irradiated with the laser beam from the optical pickup 31. Thus, the temperature of the recording surface of the optical disc 2 can be locally raised to record desired data.

The RF amplifier 34 includes a current-voltage converting circuit, an amplifying circuit, a matrix arithmetic circuit or the like, and generates a reproducing RF signal, a tracking error signal (refer it to as a TE signal, hereinafter), a focus error signal (refer it to as an FE signal, hereinafter), etc. The RF amplifier 34 outputs management information transmitted from the optical pickup 31 in addition to the generated reproducing RF signal, the TE signal, and the FE signal to the DSP 35.

The RF amplifier 34 outputs a light quantity control signal for controlling the quantity of the light of the laser beam with which the optical disc 2 is irradiated from the optical pickup 31. The RF amplifier 34 maintains, upon reproducing the data, the quantity of the light of the laser beam applied to the optical disc 2 from the optical pickup 31 to a prescribed level. On the other hand, upon recording the data, the RF amplifier 34 changes the signal level of the light quantity control signal in accordance with the video data from the DSP 35.

The DSP 35 corresponds to the drive chip set 20, and changes an inputted reproducing RF signal to a binary code under the control of the microcomputer 39 corresponding to the drive control unit 19 and transmits the signal to the system control unit 15 or the codec processing unit 16. The DSP 35 transmits the TE signal and the FE signal generated by the RF amplifier 34 to the drive IC 36. Further, the DSP 35 generates, upon recording the data, a recording pulse on the basis of the video data transmitted from the codec processing unit 16 and outputs the recording pulse to the optical pickup 31. Further, the DSP 35 temporarily stores the management information of the data recorded in the optical disc 2 in, for instance, the flash memory 40. The DSP 35 receives an instruction from the system control unit 15 to control the respective parts to perform various kinds of reproducing methods such as a random reproducing method or a shuffle reproducing method by referring to the management information stored in the flash memory 40.

The drive IC 36 generates the focus driving signal and the tracking start signal on the basis of the TE signal or the FE signal inputted from the DSP 35 and supplies the signals to the optical pickup 31. Further, the drive IC 36 generates the thread driving signal for moving the optical pickup 31 to a desired track in accordance with the control of the microcomputer 39 and supplied the thread driving signal to the thread motor 33.

The spindle motor driver 38 generates the spindle driving signal for rotating and driving the spindle motor 32 at a prescribed speed under the control of the microcomputer 39 and supplies the spindle driving signal to the spindle motor 32.

The storing unit 37 is composed of, for instance, a RAM (Random Access memory) to temporarily store the reproducing RF signal transmitted from the DSP 35. The reproducing RF signal stored by the storing unit 37 is read out at a prescribed timing under the control of the microcomputer 39.

The microcomputer 39 corresponds to the drive control unit 19 to control the recording and reading out process of the video data relative to the optical disc 2. Further, the microcomputer 39 controls the spindle drive of the optical disc 2 and the focus drive, the tracking drive and the thread drive of the optical pickup.

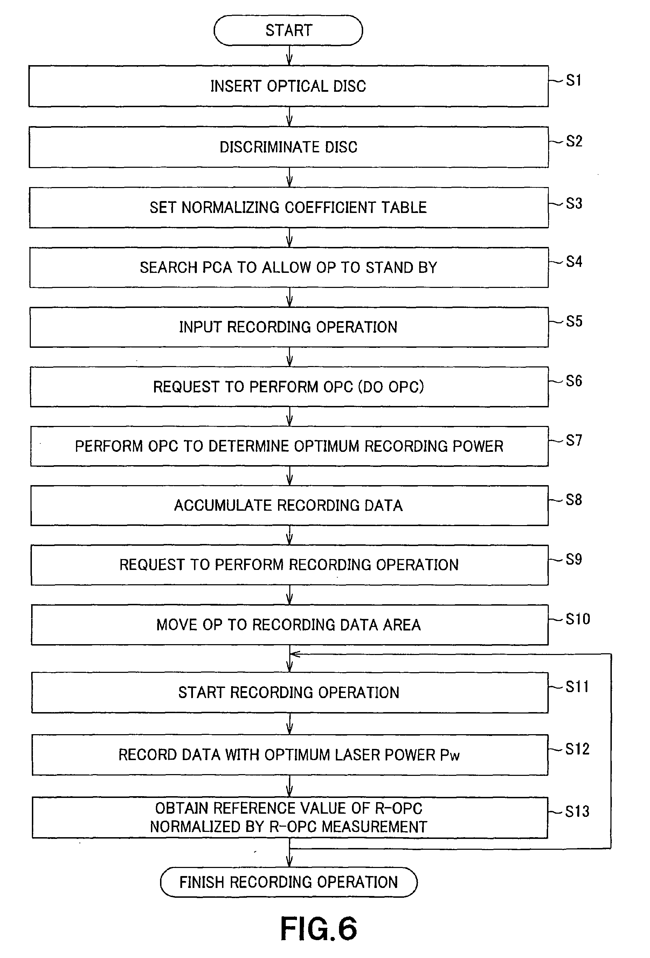

In the disc camcorder 1 having the above-described structure, the disc drive 3 is controlled in accordance with a flowchart shown in Fig. 6.

Namely, when the optical disc 2 is inserted into the disc drive 3 (step S1), the drive control unit 19 of the disc drive 3 turns on a seek servo and a focus servo to the optical pickup 31 to read out recording management data (RMD) from a recording management area (RMA) and discriminate the kind of the inserted optical disc (step S2). Then, the drive control unit 19 sets a normalizing coefficient corresponding to the kind of the inserted optical disc to a table (step S3). When the inserted optical disc is the DVD-R, the value of the coefficient is held in the normalizing coefficient table in a minimum resolution step.

The drive control unit 19 searches a test writing area (PCA: Power Calibration Area) that can be used for an OPC (Optimum Power calibration) to allow the optical pickup 31 to stand by at that position (step S4).

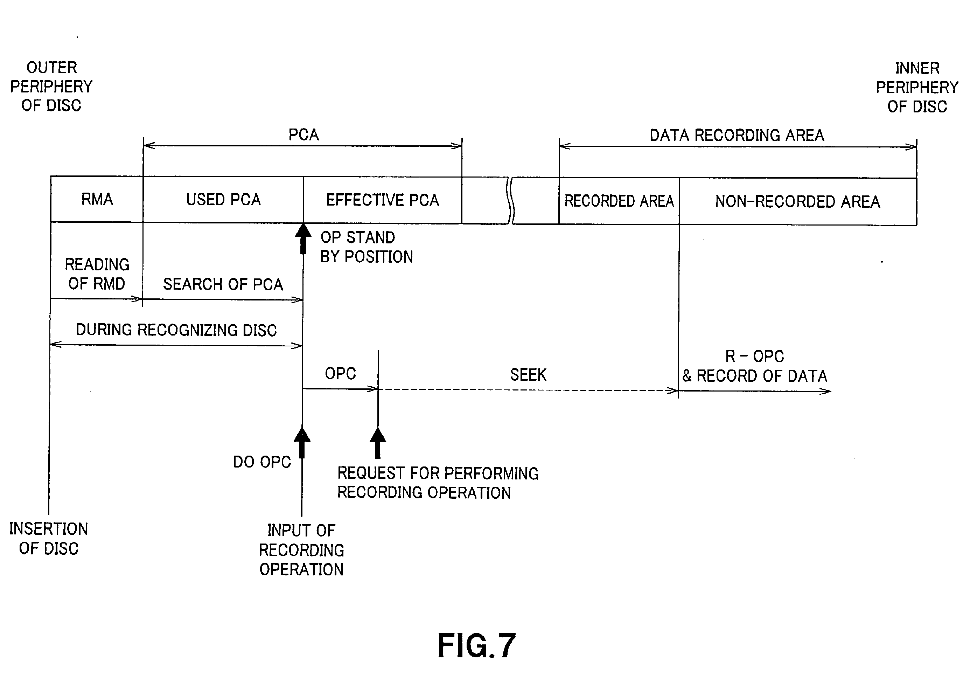

The drive control unit 19 of the optical disc drive 3 carries out control operations from the step S1 to the step S4 during recognizing the inserted optical disc 2 as shown in Fig. 7.

Then, the system control unit 15 receives an input of a recording operation by pressing a recording button by the user through the HI control unit 12 (step S5), the system control unit 15 requests the drive control unit 19 of the disc drive 3 to perform the OPC (step S6).

When the drive control unit 19 of the disc drive 3 receives the request for performing the OPC (DO OPC) from the system control unit 15, the drive control unit 19 immediately performs an OPC operation at the stand-by position to determine an optimum recording power Pw (step S7). In the OPC operation, the recording power is stepwise changed and recorded in a certain range and an area in which the recording power is recorded is reproduced to measure the asymmetry of the RF signal. Thus, it is decided with which power the area is recorded is brought to an optimum recording state. By this operation, the optimum recording power Pw in a certain environment determined by the temperature of a set or the like is obtained.

When the system control unit 15 accumulates recording data in a memory as much as 50 % (5 to 15 seconds) (step S8), the system control unit 15 requests the drive control unit 19 of the disc drive 3 to perform a recording operation (step S9).

When the drive control unit 19 receives the request for performing the recording operation from the system control unit 15, the drive control unit 19 moves the optical pickup 31 to a data recording area (step S10) to start the recording operation (step S11). The data begins to be written with the optimum laser power Pw determined in the step S7 (step S12). The data is recorded for 256 sectors or more and the average of the results of R-OPC measurements of the 256 sectors or more is obtained to obtain a reference value of the R-OPC normalized by using the normalizing coefficient table (step S 13).

After that, the R-OPC is constantly measured to get the reference value and while the R-OPC is performed on the basis of the obtained reference value, the data is recorded with the optimum laser power Pw.

The drive control unit 19 of the disc drive 3 performs the OPC operation to begin to write the data after the optical disc 2 is inserted into the disc drive 3. When the reference value of the R-OPC is obtained, the drive control unit 19 sets a status in the system control unit 15 side. As long as the status is held, even when a record and a stop are repeated, the previously obtained R-OPC value is employed. Further, when a cover of a disc insert part is opened, the status of the system control unit 15 side is rest. Then, when the status of the system control unit 15 side is cleared, it is recognized that the optical disc 2 is replaced by another optical disc to perform the OPC operation.

As described above, in the disc camcorder 1, when the optical disc 2 is inserted into the disc drive 3, the trial writing area PCA that the optical pickup 31 can be used for the OPC is searched until the optical disc 2 is recognized. The optical pickup 31 is allowed to stand by at the position. After the user presses the recording button, the OPC operation is carried out to obtain the optimum recording power Pw.

Then, the optical pickup 31 is moved to the data recording area to record the data. In this case, to maintain the recording power during recording the data to an optimum state, the reference value of the R-OPC is obtained at the time when real recording data begins to be recorded in the data recording area.

As the recording power used to obtain the reference value of the R-OPC, an optimum power under a state having the same environment determined by the temperature in the set or the like needs to be used. In the disc camcorder 1, within a time after the user presses the recording button until the data is recorded in the optical disc 2, the optimum power by the OPC operation and the reference value of the R-OPC are completely obtained.

In order to complete the two operations under a state in which the time is limited, in the disc camcorder 1, it is decided in which area of the PCA the OPC operation is to be performed to allow the optical pickup 31 to stand by in a still state or in a stopping state. Thus, a time required for searching the PCA can be shortened and, as soon as the user presses the recording button, the OPC operation can be performed at the same time. After that, the optical pickup 31 is allowed to seek the data recording area, record the real recording data and obtain the reference value of the R-OPC at the same time. While the real recording data is recorded, the reference value of the R-OPC is obtained. Accordingly, an area necessary for obtaining the reference value of the R-OPC can be more adequately ensured than that when the reference value of the R-OPC is obtained in the PCA. An unevenness in reflectance or flaws in the plane of the optical disc 2 and an error component can be removed to obtain an accurate reference value of the R-OPC.

It is to be understood to a person with ordinary skill in the art that the present invention is not limited to the above-described embodiment and various changes, substitutions or equivalence thereto may be made without departing the attached claims and the gist thereof.

### Industrial Applicability

As described above, in the present invention, when it is indefinite whether or not the OPC is necessary in the PCA, the OP is waited for in the PCA. Accordingly, when the OPC is required, the OPC can be immediately carried out.

Further, in the present invention, the reference of the R-OPC is obtained in the data recording area so that the unevenness in reflectance or the flaws in the plane of the optical disc and the error component can be removed to obtain the reference value of the R-OPC.

Further, in the present invention, the reference value of the R-OPC is obtained in the data recording area. Thus, the area usually employed for the PCA can be used for the OPC. When a use is applied to the video data recording device in which an image and an audio are recorded such as the video camcorder with a camera, since a using method that recording operations are repeated in small pieces may be considered, the number of times of the OPCs can be more increased than that until now.

According to the present invention, in the video data recording device for recording the image and the audio such as the video camcorder with the camera and using the optical disc as the optical recording medium, a time for measuring the optimum recording power is shortened and the accuracy thereof is improved. Accordingly, the image or the audio can be recorded by a proper recording power without interruption.

## Claims

1. An optical recording method in an optical recording device for recording data on an optical recording medium by an optical pickup, said optical recording method comprising the steps of:
searching a test writing area PCA (Power Calibration Area) that can be used for an OPC (Optimum Power Calibration) on the optical recording medium when the optical recording medium is inserted into the optical recording device and allowing the optical pickup to stand by at that position; and
carrying out an OPC operation at the stand-by position when an input of a recording operation of data is received, moving the optical pickup to a data recording area on the optical recording medium after an optimum power is obtained, and recording the data in the data recording area on the optical recording medium by the optical pickup.

2. The optical recording method according to claim 1, wherein real recording data is recorded in the data recording area by the optical pickup moved to the data recording area on the optical recording medium to obtain a reference value of an R-OPC (Running Optimum Control) and record the data while the R-OPC is performed on the basis of the obtained reference value.

3. The optical recording method according to claim 2, wherein the reference value of the R-OPC is obtained in accordance with a normalization by a normalizing coefficient table read upon inserting an optical disc.

4. An optical recording device for recording data on an optical recording medium by an optical pickup, said optical recording device comprising:
a control means performing a control for searching a test writing area PCA (Power Calibration Area) that can be used for an OPC (Optimum Power Calibration) on the optical recording medium when the optical recording medium is inserted into the optical recording device and allowing the optical pickup to stand by at that position; and carrying out an OPC operation at the stand-by position when an input of a recording operation of data is received, moving the optical pickup to a data recording area on the optical recording medium after an optimum power is obtained, and recording the data in the data recording area on the optical recording medium by the optical pickup.

5. The optical recording device according to claim 4, wherein the control means records real recording data in the data recording area by the optical pickup moved to the data recording area on the optical recording medium to obtain a reference value of an R-OPC (Running Optimum Control) and record the data while the R-OPC is performed on the basis of the obtained reference value.

6. The optical recording device according to claim 5, wherein the reference value of the R-OPC is obtained in accordance with a normalization by a normalizing coefficient table read upon inserting an optical disc.

7. The optical recording device according to any one of claims 4 to 6, further comprising:
an image pick-up means to record a video signal obtained by the image pick-up means on the optical recording medium.
